# FASCICULE DE BREVET EUROPEEN

(11) **EP 0 743 652 B1**
(45) Date de publication et mention de la délivrance du brevet: **14.04.1999**
(21) Numéro de dépôt: 96420177.6
(22) Date de dépôt: 15.05.1996
(51) Int. Cl.: G21C 19/18, G21C 19/16

(54) **Procédé et dispositif pour la manutention d'assemblages de combustibles nucléaires au sein d'un coeur de réacteur**
Verfahren und Einrichtung zur Handhabung von Kernbrennstabbündeln innerhalb eines Reaktorkerns
Method and installation for handling nuclear fuel assemblies within a reactor core

(30) Priorité: 17.05.1995 FR 9506078
(43) Date de publication de la demande: 20.11.1996
(73) Titulaire: REEL S.A., F-69450 Saint Cyr au Mont d'Or (FR)
(72) Inventeur: Leveugle, Jean, 69006 Lyon (FR)
(74) Mandataire: Vuillermoz, Bruno

(56) Documents cités:
- EP-A- 0 220 117
- EP-A- 0 376 780
- EP-A- 0 533 547
- WO-A-92/15097
- FR-A- 2 614 128
- PATENT ABSTRACTS OF JAPAN vol. 13, no. 256 (P-884) 14 Juin 1989 & JP-A-01 054 400 (MITSUBISHI HEAVY IND) 01 Mars 1989
- PATENT ABSTRACTS OF JAPAN vol. 14, no. 503 (P-1126) 02 Novembre 1990 & JP-A-02 208 599 (MITSUBISHI HEAVY IND) 20 Août 1990

## Description

L'invention concerne un procédé et un dispositif destinés à permettre la manutention d'assemblages de combustibles nucléaires au sein d'un coeur de réacteur, et plus spécifiquement, le chargement d'un tel réacteur.

De manière connue, le coeur d'un réacteur nucléaire est constitué de crayons ou aiguilles de combustibles regroupés afin de former des assemblages, susceptibles d'être manipulés indépendamment les uns des autres. Ces assemblages sont positionnés côte à côte, généralement verticalement, au sein d'une structure interne et rigide, à savoir la cuve du réacteur comprenant sensiblement vers le fond un sommier ou plaque de coeur, pourvu de réceptacles contigus dénommés emplacements, destinés à recevoir le pied desdits assemblages ainsi constitués. Par ailleurs, ce sommier ou plaque de coeur est également pourvu d'orifices traversants destinés à permettre d'assurer la circulation au sein même des assemblages d'un fluide de refroidissement et/ou de ralentissement des neutrons émis lors de réactions nucléaires assurant le dégagement d'énergie.

Si la mise en place de ces assemblages lors de la première mise en service d'un réacteur ne pose pas de difficulté particulière, en revanche, il en est différemment dès lors que l'on procède au remplacement, généralement partiel, de ces assemblages après utilisation. En effet, on observe, après une certaine période d'irradiation, que les assemblages peuvent présenter différents types de déformation, tels que notamment des vrillages, des déformations en arc de cercle ou "bananes", des flambages, de sorte que leur déplacement et leur repositionnement au sein dudit coeur s'avère le plus souvent délicat.

Classiquement, et afin d'homogénéiser le rayonnement d'énergie dans le fond du coeur, on dispose en effet les assemblages sur le sommier en fonction de leur degré d'usure ou d'irradiation. Typiquement, on fractionne la plaque de coeur en trois zones et l'on positionne les assemblages neufs en périphérie, les assemblages ayant subi un premier cycle d'exploitation en zone médiane, et les assemblages les plus usagés au centre du coeur, et ceci afin d'éviter de créer une zone chaude au centre du coeur.

Compte tenu des déformations engendrées au niveau des différents assemblages après un ou plusieurs cycles d'exploitation, leur réinsertion en d'autres sites du coeur au niveau du sommier peut poser problème notamment compte tenu d'interférences en volume avec les assemblages voisins. Afin de s'affranchir de ces problèmes de frottement et d'interférence, on a par exemple proposé dans les documents FR-A-2 588 689 et FR-A-2 614 128, d'utiliser des outils de guidage, afin d'aider à la mise en place des assemblages dans les orifices prévus à cet effet au sein du sommier. Ces outils fonctionnent selon le principe de la coopération de la gravité et de plans inclinés pour obtenir, lors du chargement, un guidage du pied de chacun des assemblages vers la position souhaitée,. l'assemblage n'étant transféré que par la tête.

Par ailleurs, compte tenu des déformations observées des assemblages irradiés, de forme de plus en plus souvent aléatoire, on a également proposé d'associer à ce guidage par la tête de l'assemblage, un guidage par le pied de celui-ci. On a par exemple décrit dans la demande EP-A-0 696 806 du Demandeur, une telle installation assurant le déplacement de la tête et du pied de l'assemblage en synchronisme. Cet outil utilise comme principe de fonctionnement l'utilisation d'un positionnement décalé de la machine de chargement lors du mouvement vertical et d'un outil permettant d'améliorer fortement les conditions de mise en place d'assemblages de combustibles grâce au guidage par le pied.

Si incontestablement, cette nouvelle machine remplit l'objectif qui lui est imparti pour un grand nombre d'assemblages, en revanche, compte-tenu de son principe même de fonctionnement, son utilisation induit la neutralisation de certains emplacements du sommier qui ne peuvent être remplis avec un tel outil. De fait, typiquement, environ 25% des emplacements du sommier ne peuvent être remplis avec un tel outil. De fait, et afin de permettre le remplissage de ces emplacements, on a proposé d'adjoindre aux machines traditionnelles des outils spécifiques et accessoires, mais dont l'utilisation demande des précautions particulières , lourdes à mettre en oeuvre, notamment dans l'eau ou dans le liquide de refroidissement et/ou de ralentissement.

Par ailleurs, on peut noter qu'à titre général, tous les systèmes d'outil ou accessoires d'aide à la mise en place des assemblages de combustibles neutralisent une partie de ces emplacements, et partant, interdisent une optimisation du remplissage de l'ensemble desdits emplacements.

On a également décrit dans le documents Patent Abstracts of Japan, vol. 13 n°256 et JP-A-01 054400, un procédé visant à permettre le chargement d'assemblages en arc de cercle dans le coeur d'un réacteur, qui consiste à incliner un mât reposant sur un chariot. Cependant, rien n'est précisé quant au redressement des assemblages.

L'invention propose de s'affranchir de ces inconvénients. Elle vise tout d'abord un procédé pour charger le coeur d'un réacteur nucléaire quel que soit l'état de déformation des assemblages qui le constituent et quel que soit l'emplacement à remplir.

Ce procédé consiste, après avoir couplé l'extrémité du mât télescopique solidaire de la machine de manutention, à l'extrémité supérieure d'un assemble de combustibles nucléaires, à incliner ledit mât, et partant l'assemblage correspondant auquel il est couplé, de telle sorte à présenter en premier lieu le pied dudit assemblage à l'emplacement souhaité du sommier de réception desdits assemblages au sein du coeur du réacteur, puis à induire le redressement dudit assemblage jusqu'à atteindre une position verticale de telle sorte à faire basculer le pied dudit assemblage au sein de l'emplacement considéré tout en synchronisant le rétablissement de la verticalité du mât avec le déplacement de la machine de chargement.

De la sorte, quel que soit le degré de déformation de l'assemblage ou des assemblages environnants, dès lors que l'on procède à la présentation du pied de l'assemblage à l'emplacement du sommier susceptible de le recevoir, on n'est plus confronté aux problèmes de frottements et d'interférences avec les assemblages environnants.

On peut donc de manière très simple remplir le sommier d'un coeur de réacteur sans plus se soucier des déformations des assemblages de combustibles déjà irradiés.

L'invention concerne également le dispositif permettant la mise en oeuvre de ce procédé. Ce dispositif pour la manutention d'assemblages de combustibles nucléaires, notamment dans le coeur d'un réacteur nucléaire comportant un sommier ou plaque de coeur destiné à recevoir lesdits assemblages selon une orientation verticale, ledit sommier étant muni de zones de réception contigues ou emplacements des pieds desdits assemblages et comprenant également des orifices destinés à permettre la circulation d'un fluide de refroidissement et/ou de ralentissement des neutrons, comprend :
. une machine de manutention susceptible de se déplacer dans un plan horizontal au-dessus du coeur de réacteur, et munie d'un chariot de commande, également susceptible de se déplacer selon une direction horizontale ;
. un mât télescopique, fixé par son extrémité supérieure audit chariot, et muni à son extrémité inférieure d'un organe de fixation et de couplage à l'extrémité supérieure d'un assemblage de combustibles.

Selon l'invention, le chariot est muni d'une pluralité d'organes, susceptibles d'agir sur l'assiette du mât télescopique, de telle sorte à incliner celui-ci par rapport à la verticale.

Selon une première forme de réalisation de l'invention, la solidarisation du mât télescopique au chariot s'effectue au moyen d'une réhausse constituée de deux parties, respectivement une partie inférieure solidaire du chariot, et une partie supérieure solidaire de la partie supérieure du mât, lesdites parties coopérant l'une avec l'autre de telle sorte à interdire tout mouvement de l'une par rapport à l'autre durant le fonctionnement normal de la machine, mais susceptible de pouvoir s'écarter l'une de l'autre selon une direction verticale ou une direction voisine, de telle sorte à aboutir à une inclinaison de la partie supérieure par rapport à la partie inférieure de ladite réhausse.

Selon cette forme de réalisation de l'invention, ce déplacement est assuré au moyen d'une came logée au sein d'une butée, susceptible de se translater verticalement au sein d'un boitier de guidage, ladite butée agissant sur la partie supérieure de la réhausse sous l'action de ladite came.

Selon l'invention, ces organes de modification d'assiette sont au nombre de quatre, sont répartis à 90° l'un par rapport à l'autre et sont susceptibles d'agir soit individuellement soit simultanément afin d'assurer l'inclinaison du mât télescopique, et partant de l'assemblage auquel il est couplé selon huit directions réparties à 45° l'une de l'autre.

Selon une variante de l'invention, ces mécanismes à câme sont remplacés par des vérins disposés également à 90° les uns par rapport aux autres, et suscetibles d'être actionnés deux par deux.

La partie supérieure de la réhausse comporte en périphérie une couronne dentée au sein de laquelle est susceptible d'engrèner un pignon denté, afin d'assurer la rotation du mât et de l'assemblage de combustibles auquel il est couplé. Cette rotation peut être utilisée, le cas échéant, pour parfaire la présentation du pied de l'assemblage de combustibles en regard de son emplacement, notamment en cas de vrillage.

Selon une autre forme de réalisation de l'invention, l'embase du mât est assimilée à une rotule virtuelle, susceptible de s'incliner selon une infinité de direction par rapport à la verticale, et dont le déplacement possible de la base décrit une demi-sphère. Pour ce faire, ladite embase repose sur des plots périphériques, typiquement quatre, voire plus, lesdits plots étant réalisés en un lamellé élastomère - acier, présentant une grande capacité de déformation en cisaillement, et au contraire une faible capacité de déformation en compression. De plus, ladite embase est actionnée en déplacement au moyen d'actionneurs agissant au niveau de la périphérie de l'embase, le nombre d'actionneurs étant au moins de deux, orientés à 90 degrés l'un par rapport à l'autre, et dont l'action conjuguée aboutit à l'inclinaison souhaitée de l'embase donc du mât téléscopique.

Ces actionneurs sont avantageusement constitués de vérins électriques à faible course, eux-mêmes montés sur une rotule élastomère, de telle sorte à adapter leur orientation en fonction de l'orientation de l'embase dont ils sont à l'origine.

La manière dont l'invention peut être réalisée et les avantages qui en découlent, ressortiront mieux de l'exemple de réalisation qui suit donné à titre indicatif et non limitatif à l'appui des figures annexées.

La figure 1 est une représentation schématique en perspective du dispositif conforme à l'invention, agissant selon le procédé traditionnel.

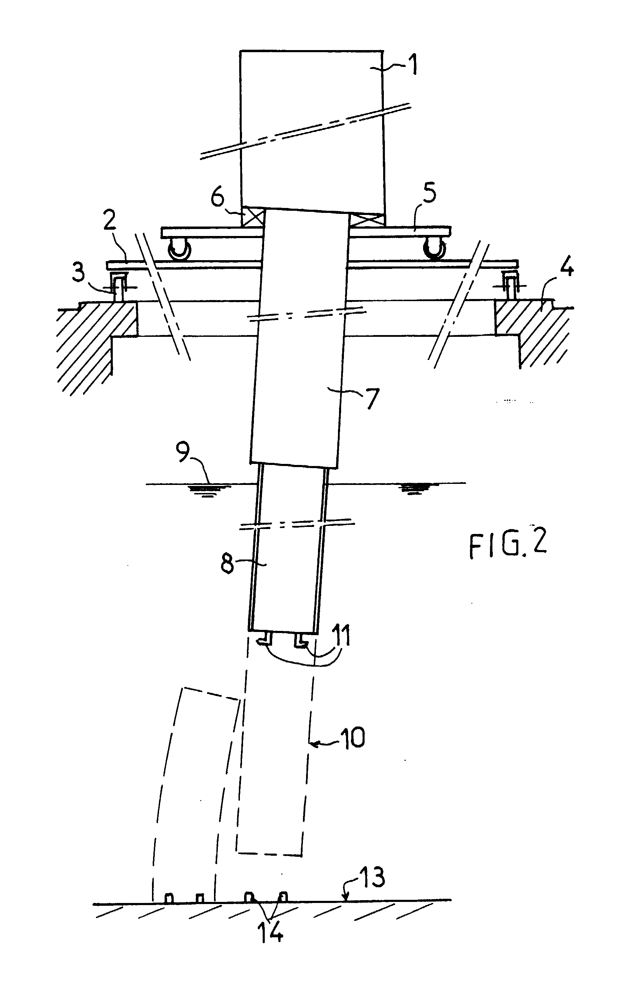

La figure 2 est une représentation analogue à la figure 1 dans laquelle le dispositif conforme à l'invention fait travailler le mât selon une direction inclinée par rapport à la verticale.

La figure 3 est une vue schématique du dessus du chariot de commande du dispositif conforme à une première forme de réalisation de l'invention.

La figure 4 est une vue partielle latérale du chariot de commande de la figure 3.

Les figures 5 et 6 sont des vues schématiques en section des organes d'inclinaison du mât du dispositif conforme à la première forme de réalisation de l'invention.

La figure 7 est une représenation schématique en perspective d'ensemble d'une seconde forme de réalisation de l'invention.

La figure 8 est une représentation schématique plus détaillée de l'embase du mât selon la seconde forme de réalisation de l'invention.

La figure 9 est une représentation schématique de l'un des actionneurs des figures 7 et 8.

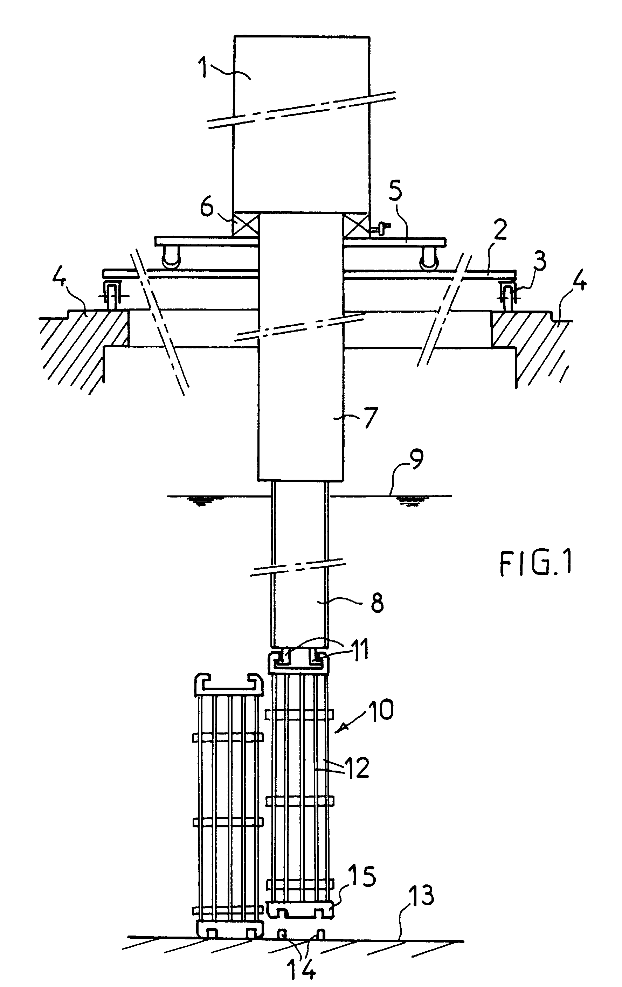

On a donc représenté sur la figure 1 un schéma de principe représentant la machine de manutention mettant en oeuvre le dispositif de l'invention. Cette machine (1) comporte une structure ou pont (2) munie de galets (3) de circulation sur des rails portés par les bords (4) de la piscine dans laquelle est plongée la cuve (non représentée) d'un réacteur nucléaire de type par exemple à eau pressurisée (REP). On a par ailleurs représenté par (9) le niveau supérieur de la piscine, contenant de l'eau aggissant comme liquide de refroidissement et comme ralentisseur de neutrons.

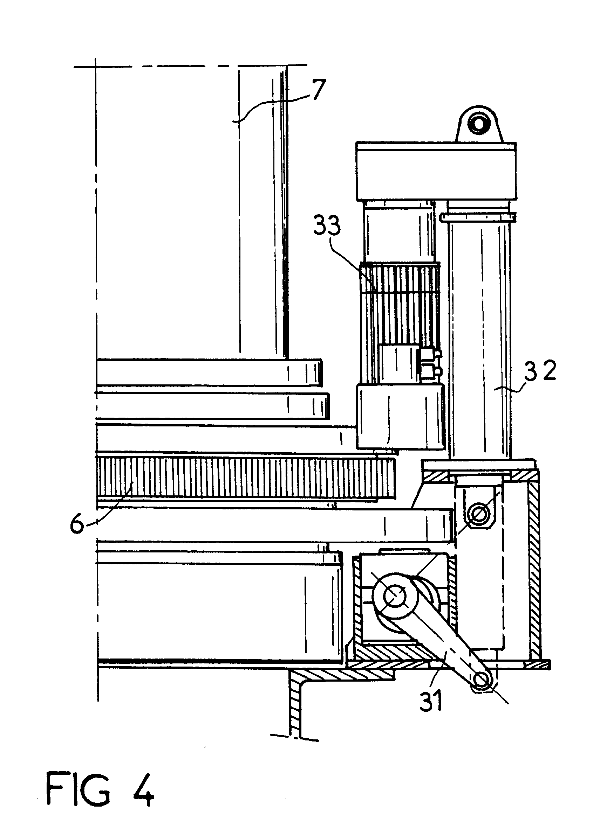

De manière connue, la structure (2) porte elle-même des rails de guidage d'un chariot (5), mobile selon une direction perpendiculaire à la direction de déplacement de la structure. Le chariot (5) porte un mât vertical (7) par l'intermédiaire d'un mécanisme (6) d'entraînement en rotation autour de l'axe dudit mât, ce mécanisme (6) étant typiquement constitué d'une couronne dentée, que l'on peut mieux observer sur la figure 4. Le mât (7) est solidaire du chariot et comprend différents organes de commande et de contrôle (non représentés) permettant le déploiement et le reploiement d'un tube télescopique (8), coaxial avec le mât (7).

L'extrémité inférieure du tube télescopique (8) comporte un grapin ou système de préhension équivalent (11), destiné à saisir l'extrémité supérieure d'un assemblage (10) d'éléments combustibles (12), afin de permettre soit son chargement, soit son déchargement respectivement à l'intérieur et hors du coeur du réacteur.

Ces assemblages de combustibles sont en soi connus et comportent à leur extrémité inférieure un pied (15), susceptible de coopérer avec des pions de positionnement (14), ménagés au sein d'un sommier (13), lui-même positionné sensiblement dans le fond de la cuve du réacteur. Ces assemblages (10) sont positionnés côte à côte selon une direction verticale et sont agencés sensiblement selon une section octogonale, comportant typiquement 156 assemblages pour un réacteur de 900 MWe. Lesdits assemblages sont agencés de telle sorte que le fluide de refroidissement, l'eau dans l'exemple décrit, puisse circuler entre les aiguilles (12) constitutives desdits assemblages (10).

Comme on peut le voir sur la figure 1, lorsque l'on procède au chargement d'assemblages de combustibles neufs, c'est-à-dire n'ayant pas encore été irradiés lors d'un ou de plusieurs cycles d'exploitation du réacteur, ceux-ci ne présentent pas de déformations, et ce chargement peut s'effectuer de manière traditionnelle en amenant les assemblages au niveau de leur emplacement correspondant au sein du sommier (13) de manière verticale.

Cependant, lorsqu'il s'agit de procéder au renouvellement, notamment par tiers desdits assemblages lorsque le coeur du réacteur a déjà fonctionné, compte tenu des nombreuses déformations desdits assemblages, un tel acheminement n'est plus possible. Aussi, et selon le procédé conforme à l'invention, afin de permettre le chargement des assemblages, on incline le mât (7) et partant le tube télescopique (8) et l'assemblage (10) auquel il est couplé, de telle sorte à présenter tout d'abord le pied (15) de l'assemblage considéré au niveau de l'emplacement du sommier (13) auquel il est affecté, c'est à dire que les pions dudit emplacement sont engagés en partie dans les orifices prévus à cet effet dans le pied dudit assemblage.

Cette inclinaison de l'assemblage permet ainsi de s'affranchir des déformations éventuelles des assemblages voisins pour la mise en place de l'assemblage considéré, et donc élimine toute interférence de frottement ou volumique dûe à de telles déformations.

Une fois ledit assemblage (10) présenté au niveau de l'emplacement auquel il est affecté, c'est à dire, et comme déjà dit, une fois les pions de positionnement dudit emplacement engagés au sein du pied de l'assemblage, celui-ci est redressé en rapprochant le tube télescopique (8) et le mât (7) de la verticale, tout en réalisant en synchronisme la translation du chariot (5) voire de la structure (2) pour ramener l'assemblage (10) considéré selon une position verticale. Compte tenu de la puissance des moteurs mis en oeuvre au niveau du chariot et/ou de la structure (2), il est ainsi possible de lutter contre la résistance opérée par la déformation d'assemblages voisins ou inhérente à la propre déformation de l'assemblage manutentionné.

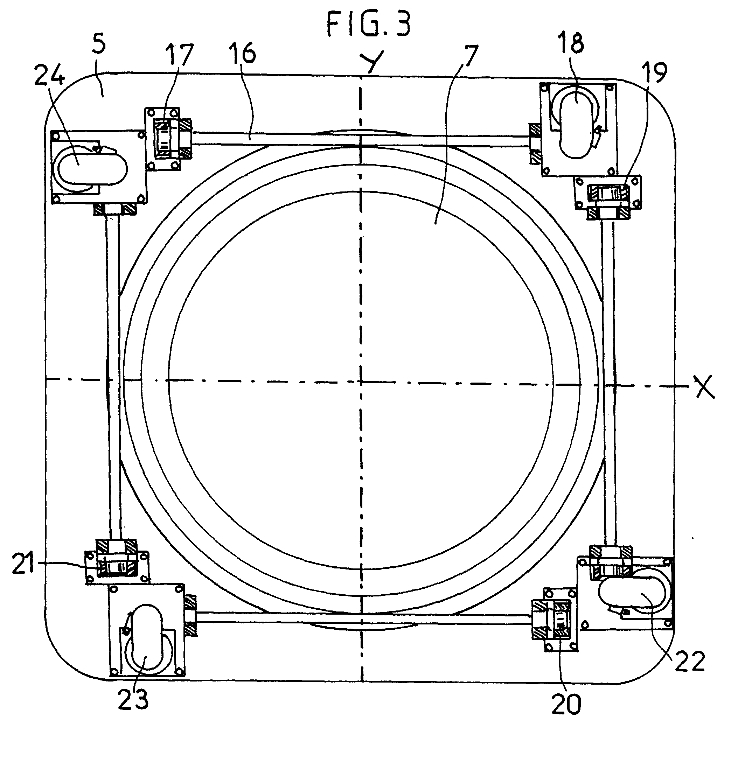

Il va être décrit maintenant plus en détail le mécanisme d'inclinaison du mât télescopique (7, 8) conformément à une première forme de réalisation de l'invention, et ce en liaison avec les figures 3 à 6.

Le mât (7) est solidarisé au chariot (5) par le biais d'une réhausse constituée de deux parties, respectivement une partie supérieure (25) solidaire du mât (7), et une partie inférieure (26) solidaire du chariot (5). Ces deux parties sont étroitement imbriquées l'une dans l'autre, mais peuvent cependant s'écarter selon une direction verticale l'une par rapport à l'autre. Pour ce faire, le chariot (5) comporte quatre organes de modification d'inclinaison (17, ,20, 21), répartis à 90° deux à deux, et de manière régulière autour du mât (7) ainsi qu'on peut l'observer sur la figure 3.

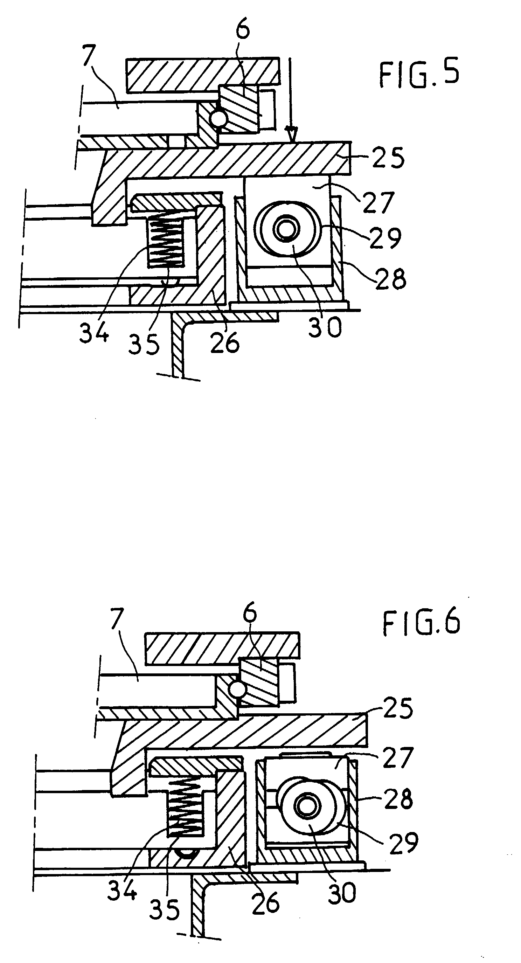

Ces organes comportent chacun une butée (27), susceptible de se translater verticalement au sein d'un boitier de guidage (28) solidaire de la partie inférieure (26) de la réhausse. La face supérieure de cette butée est susceptible de coopérer avec la partie supérieure (25) de la réhausse du mât (7). Cette butée (27) est percée d'une lumière (29), s'étendant sensiblement horizontalement et constituée de deux disques non concentriques. Une came (30), solidaire d'un axe horizontal (16), est susceptible de tourner, sous l'action de cet axe au sein de cette lumière. Compte tenu du profil particulier de la lumière (29), on aboutit par rotation de la came au sein de cette lumière à une position haute (figure 5) et à une position basse (figure 6) de la butée, induisant respectivement le réhaussement et le maintien en position de repos (correspondant à l'horizontale) de la partie supérieure (25) de la réhausse.

L'axe (16) est mû en rotation au moyen d'un levier (31) susceptible de décrire un arc de cercle d'environ 90° ainsi qu'on peut l'observer sur la figure 4. Ce levier est lui-même mû par l'action d'un vérin (32) lui-même actionné par un moteur électrique à courant continu (33). Chacun des ensembles moteur (31, 32, 33) de chaque organe de modification d'inclinaison (17, 19, 20, 21) a été représenté sur la figure 3 par les références (18, 22, 23, 24).

L'action de ces cames et corollairement celle des butées (27) est limitée d'une part par la course de la butée bien sûr, mais également par la coopération entre la partie inférieure (26) et la partie supérieure (25) de la réhausse par l'intermédiaire d'un ressort taré (34) intégré au sein d'un logement (35) ménagé au sein de la partie supérieure (25) de la réhausse, et coopérant avec la partie inférieure (26) comme on peut bien l'observer sur les figures 5 et 6. De plus, ce ressort maintient les positions relatives des parties supérieures (25) et inférieures (26) en position de repos (c'est à dire en situation normale).

Chacun des organes de modification d'inclinaison (17, 19, 20, 21) est susceptible d'être actionné indépendamment l'un de l'autre, voire simultanément en couple en fonction de l'inclinaison souhaitée et de la direction de cette inclinaison.

De la sorte, si par exemple les deux organes (17, 19) sont actionnés simultanément, il est possible d'obtenir l'inclinaison du mât (7) selon la direction Y représentée sur la figure 3. En revanche, si les organes (17, 19, 21) sont actionnés, l'inclinaison obtenue s'effectuera selon la bissectrice de l'angle (-X, O, Y).

Selon une variante de l'invention non représentée, les mécanismes à came et butée ci-dessus décrits peuvent être remplacés par quatre vérins positionnés à chacun des angles du chariot de commande (5), à l'instar desdits mécanismes, et peuvent alors être actionnés deux à deux.

De la sorte, on comprend qu'il est ainsi aisément possible d'obtenir une inclinaison du mât (7) et partant de l'assemblage de combustibles (10) selon les huit directions essentielles, à savoir selon les axes (OX), (OY), (O-X) et (O-Y), et selon les bissectrices correspondantes.

En outre, de par le pilotage simultané du chariot (5) et de la structure (2), lorsque le pied de l'assemblage considéré est sensiblement en regard de l'emplacement du sommier qui lui est attribué, on aboutit à un positionnement précis dudit assemblage et à sa mise en place selon une direction verticale, c'est à dire d'aplomb, indépendamment du degré de déformation des assemblages immédiatement adjacents, ou de l'assemblage en cours de positionnement.

De plus, en cas de vrillage dudit assemblage, la rotation possible du mât téléscopique (7, 8) par le biais de la couronne dentée (6) permet de faciliter la présentation dudit assemblage au niveau de l'emplacement considéré.

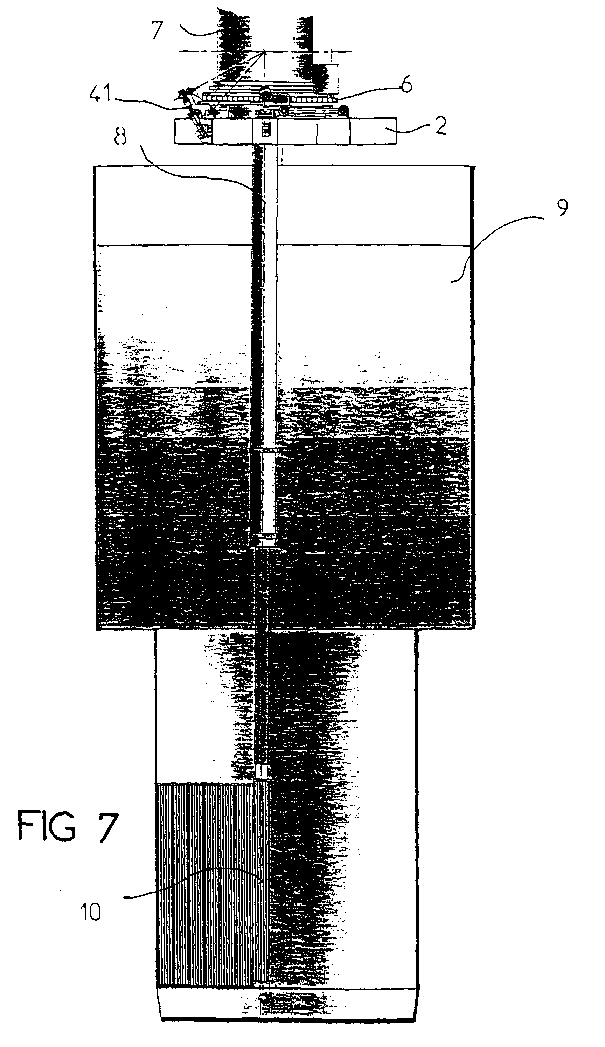

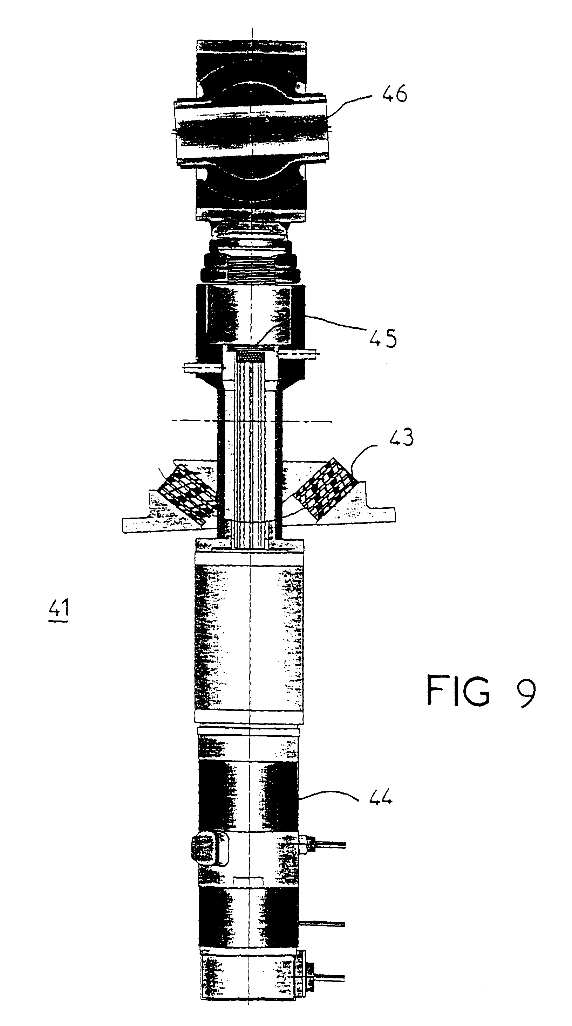

Il va être maintenant décrit plus en détail une seconde forme de réalisation de l'invention, et ce, en liaison avec les figures 7 à 9.

Selon cette forme de réalisation, l'embase (36) du mât téléscopique (7, 8) est assimilée à une rotule virtuelle, susceptible de s'incliner selon une infinité de direction par rapport à la verticale. De fait, on a représenté par une trait discontinu (42) le déplacement possible de l'extrémité inférieure de cette rotule, à savoir typiquement une demi-sphère.

L'embase (36) repose à cet effet sur des plots périphériques (37), par exemple au nombre de quatre, régulièrement répartis autour de l'embase, et fixés sur la machine de chargement. Cependant, on pourrait concevoir un nombre de plots plus important, jusqu'à atteindre un continuum.

Ces plots (37) sont constitués d'un lamellé élastomère - acier, présentant une grande capacité de déformation en cisaillement, et au contraire une faible capacité de déformation en compression. De tels lamellés sont par exemple commercialisés par les sociétés de droit français TECHLAM ou PAULSTRA. Ils permettent de transmettre des efforts très importants, tout en autorisant des débattements également importants, tout en supprimant un grand nombre d'éléments mécaniques traditionnels, habituellement utilisés pour aboutir au même débattement.

L'embase (36) du mât téléscopique (7, 8) est actionnée en déplacement au moyen d'actionneurs (41) agissant au niveau de la périphérie de l'embase. Ces actionneurs, au moins au nombre de deux, orientés à 90 degrés l'un par rapport à l'autre, sont avantageusement constitués par des vérins électriques à faible course, eux-mêmes montés sur une rotule élastomère (43), du même type que les plots (37), de telle sorte à adapter leur orientation en fonction de l'orientation de l'embase dont ils sont à l'origine. Ils comportent un moteur électrique (44) actionnant, éventuellement par l'intermédiaire d'un moto-réducteur, un système vis-écrou (45), sans jeu, à haut rendement, comportant des rouleaux. entre vis et écrou, assurant la modification de l'inclinaison de l'embase, par l'intermédiaire d'une autre rotule (46), solidarisée à l'embase (36).

Avantageusement, il peut être prévu quatre actionneurs, répartis à 90 degrés deux à deux, et montés en opposition, et asservis de telle façon que l'embase (36) du mât télescopique puisse s'incliner suivant une infinité de directions.

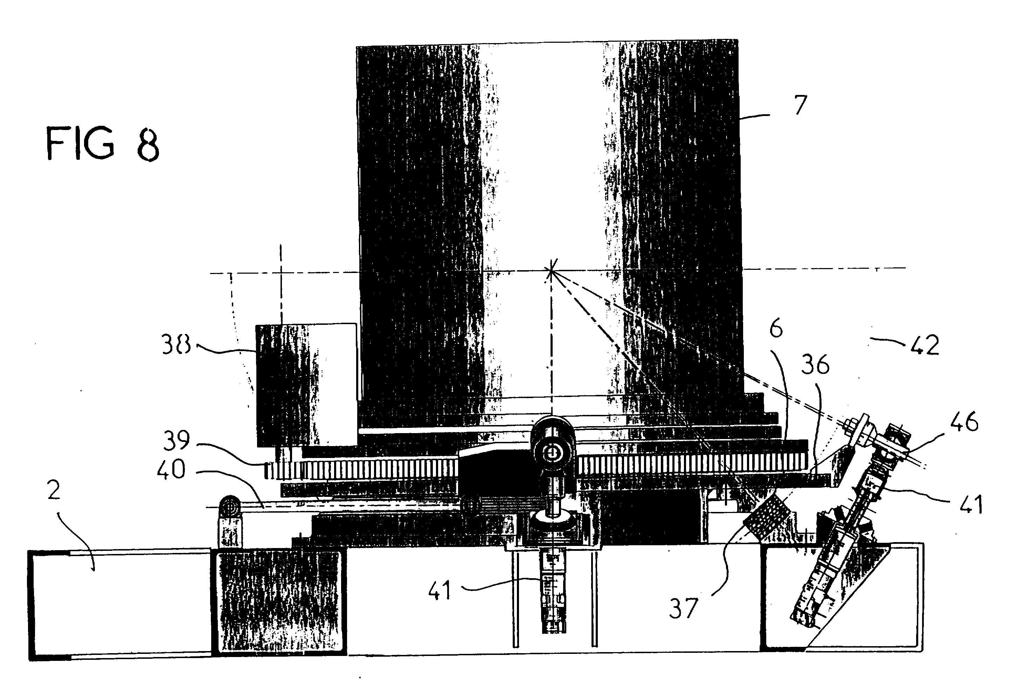

En outre, afin de stabiliser le mât téléscopique, et pour éviter qu'il entre indument en rotation, l'embase (36) est solidarisée à la machine de chargement par l'intermédiaire d'une barre anti-rotation (40), ainsi qu'on peut bien l'observer sur la figure 8.

Par ailleurs, tout comme dans la première forme de réalisation de l'invention, le mât téléscopique (7, 8) peut entrer en rotation sous l'action d'un pignon (39) mû en rotation par un mécanisme (38) solidaire de l'embase (36), ledit pignon engrènant dans la couronne à billes dentée (6) ménagée au-dessus de l'embase (36) dudit mât. La couronnes à billes (6) est posée sur l'embase (36). Elle permet une rotation dudit mât.

On conçoit de fait la simplification du mécanisme d'inclinaison du mât téléscopique.

De la sorte, il est ainsi possible, quel que soit le degré de déformation des assemblages de combustibles, de remplir la totalité du sommier au sein d'un coeur de réacteur à l'aide d'un mécanisme simple à mettre en oeuvre tout en optimisant la vitesse de chargement et de déchargement dudit coeur, donc en diminuant la durée d'interruption de fonctionnement du réacteur considéré et en optimisant le fonctionnement du parc des centrales.

## Revendications

1. Procédé pour la manutention d'assemblages (10) de combustibles nucléaires au sein du coeur d'un réacteur nucléaire mettant en oeuvre une machine de chargement (1) susceptible de se déplacer selon un plan horizontal surplombant ledit réacteur, et munie d'un mât (7) et d'un tube télescopique (8) coaxiaux, destinés à saisir lesdits assemblages (10) par leur extrémité supérieure, ledit mât (7), et partant l'assemblage correspondant auquel il est couplé étant incliné de telle sorte à présenter en premier lieu le pied (15) dudit assemblage à l'emplacement souhaité du sommier (13) de réception desdits assemblages au sein du coeur du réacteur, ***caractérisé*** en ce qu'il consiste à déplacer la machine de chargement (1) en synchronisme avec le redressement dudit assemblage jusqu'à atteindre une position verticale de celui-ci.

2. Dispositif pour la manutention d'assemblages (10) de combustibles nucléaires, notamment dans le coeur d'un réacteur nucléaire comportant un sommier (13) destiné à recevoir lesdits assemblages selon une orientation verticale, ledit sommier étant muni de zones de réception ou emplacements contigus des pieds desdits assemblages et comprenant également des orifices destinés à permettre la circulation d'un fluide de refroidissement et/ou de ralentissement des neutrons, comprenant :
. une machine de manutention (1, 2) susceptible de se déplacer dans un plan horizontal au-dessus du coeur de réacteur, et munie d'un chariot de commande (5), également susceptible de se déplacer selon une direction horizontale, et munie d'une pluralité d'organes (17, 19, 20, 21), susceptibles d'agir sur l'assiette du mât télescopique, de telle sorte à incliner celui-ci par rapport à la verticale ;
. un mât télescopique (7, 8), fixé par son extrémité supérieure audit chariot (5), et muni à son extrémité inférieure d'un organe de fixation et de couplage (11) à l'extrémité supérieure d'un assemblage de combustibles,
***caractérisé*** en ce que la solidarisation du mât télescopique (7, 8) au chariot de commande (5) s'effectue au moyen d'une réhausse constituée de deux parties, respectivement une partie inférieure (26) solidaire du chariot (5), et une partie supérieure (25) solidaire de la partie supérieure du mât (7), lesdites parties coopérant l'une avec l'autre de telle sorte à interdire tout mouvement de l'une par rapport à l'autre en fonctionnement normal dudit dispositif, ladite partie supérieure (25) étant susceptible de s'écarter de la partie inférieure (26) selon une direction verticale ou une direction voisine, de telle sorte à permettre son inclinaison relativement à ladite partie inférieure.

3. Dispositif pour la manutention d'assemblages (10) de combustibles nucléaires selon la revendication 2, ***caractérisé*** en ce que les organes de modification d'assiette (17, 19, 20, 21) sont au nombre de quatre, répartis à 90° l'un par rapport à l'autre sur le chariot (5) et autour du mât télescopique (7, 8), et sont susceptibles d'agir soit individuellement soit simultanément afin d'assurer l'inclinaison du mât télescopique, et partant de l'assemblage auquel il est couplé selon huit directions réparties à 45° l'une de l'autre.

4. Dispositif pour la manutention d'assemblages (10) de combustibles nucléaires selon l'une des revendications 2 et 3, ***caractérisé*** en ce que l'écartement de la partie supérieure (25) par rapport à la partie inférieure (26) de la réhausse s'effectue sous l'action d'une butée (27), susceptible de se translater verticalement au sein d'un boîtier de guidage (28) solidaire de ladite partie inférieure (26), la translation de ladite butée (27) s'effectuant sous l'action de la rotation d'une came (30) au sein d'une lumière (29) ménagée au sein de ladite butée (27), ladite butée (27) coopérant avec la partie supérieure de la réhausse (25) par sa face supérieure.

5. Dispositif pour la manutention d'assemblages (10) de combustibles nucléaires selon la revendication 4, ***caractérisé*** en ce que la rotation de la came (30) au sein de la lumière (29) de la butée (27) s'effectue sous l'action d'un axe horizontal (16), lui-même mû en rotation au moyen d'un levier (31), dont l'actionnement est assuré par un ensemble moteur électrique (33) - vérin (32).

6. Dispositif pour la manutention d'assemblages (10) de combustibles nucléaires selon la revendication 2, ***caractérisé*** en ce que l'écartement de la partie supérieure (25) par rapport à la partie inférieure (26) de la réhausse s'effectue sous l'action d'un vérin à actionnement vertical.

7. Dispositif pour la manutention d'assemblages (10) de combustibles nucléaires, notamment dans le coeur d'un réacteur nucléaire comportant un sommier (13) destiné à recevoir lesdits assemblages selon une orientation verticale, ledit sommier étant muni de zones ou de réception ou emplacements contigus des pieds desdits assemblages et comprenant également des orifices destinés à permettre la circulation d'un fluide de refroidissement et/ou de ralentissement des neutrons, comprenant :
. une machine de manutention (1, 2) susceptible de se déplacer dans un plan horizontal au-dessus du coeur de réacteur, et munie d'un chariot de commande (5), également susceptible de se déplacer selon une direction horizontale, et muni d'une pluralité d'organes (17, 19, 20, 21), susceptibles d'agir sur l'assiette du mât télescopique, de telle sorte à incliner celui-ci par rapport à la verticale;
. un mât télescopique (7, 8), fixé par son extrémité supérieure audit chariot (5), et muni à son extrémité inférieure d'un organe de fixation et de couplage (11) à l'extrémité supérieure d'un assemblage de combustibles,
***caractérisé*** en ce que l'embase (36) du mât téléscopique (7, 8) repose sur une pluralité de plots périphériques (37) régulièrement répartis autour de l'embase, et fixés sur la machine de manutention, lesdits plots (37) étant chacun constitués d'un lamellé élastomère - acier, présentant une grande capacité de déformation en cisaillement, et au contraire une faible capacité de déformation en compression, et en ce que l'embase (36) est actionnée en déplacement au moyen d'actionneurs (41) agissant au niveau de la périphérie de l'embase.

8. Dispositif pour la manutention d'assemblages (10) de combustibles nucléaires selon la revendication 7, ***caractérisé*** en ce que les actionneurs (41) sont au moins au nombre de deux, orientés à 90 degrés l'un par rapport à l'autre, et sont constitués par des vérins électriques à faible course.

9. Dispositif pour la manutention d'assemblages (10) de combustibles nucléaires selon la revendication 7, ***caractérisé*** en ce que les vérins constitutifs des actionneurs (41) sont montés sur une rotule élastomère (43), de telle sorte à adapter leur orientation en fonction de l'orientation de l'embase dont ils sont à l'origine.

## Patentansprüche

1. Verfahren zur Handhabung von Kernbrennelementbündeln (10) im Inneren des Kerns eines Kernreaktors unter Verwendung einer Beschickungsmaschine (1), die sich in einer horizontalen Ebene über dem Reaktor bewegen kann und mit einem Mast (7) und einem Teleskoprohr (8) versehen ist, die zueinander koaxial sind und dazu bestimmt sind, die Bündel (10) an ihrem oberen Ende zu ergreifen, wobei der Mast (7) und damit das entsprechende Bündel, mit dem er gekoppelt ist, so geneigt werden, daß als erstes der Fuß (15) des Bündels der gewünschten Stelle des Auflagers (13) zur Aufnahme der Bündel im Inneren des Reaktorkerns zugeführt wird, dadurch gekennzeichnet, daß die Beschickungsmaschine (1) synchron mit der Aufrichtung des Bündels bewegt wird, bis eine vertikale Lage dieses Bündels erreicht wird.

2. Vorrichtung zur Handhabung von Kernbrennelementbündeln (10) insbesondere im Kern eines Kernreaktors mit einem Auflager (13), das zur Aufnahme der Bündel in einer vertikalen Ausrichtung bestimmt ist, mit den Füßen der Bündel benachbarten Aufnahmebereichen oder Stellen versehen ist und ferner Öffnungen für den Umlauf eines Fluids für die Kühlung und/oder Neutronenbremsung aufweist, umfassend - eine Handhabungsmaschine (1, 2), die sich in einer horizontalen Ebene über dem Reaktorkern bewegen kann und mit einem Antriebswagen (5) versehen ist, der sich ebenfalls in einer horizontalen Richtung bewegen kann und mit einer Vielzahl von Organen (17, 19, 20, 21) versehen ist, die auf die Standlage des Teleskopmastes einwirken können, so daß dieser gegen die Vertikale geneigt wird,
- einen Teleskopmast (7, 8), der mit seinem oberen Ende an dem Wagen (5) befestigt ist und an seinem unteren Ende mit einem Organ (11) zur Befestigung und Ankopplung an dem oberen Ende eines Brennelementbündels versehen ist,
dadurch gekennzeichnet, daß die Befestigung des Teleskopmastes (7, 8) am Antriebswagen (5) über einen Aufbau vor sich geht, der aus zwei Teilen besteht, und zwar einem unteren Teil (26), der mit dem Wagen (5) fest verbunden ist, und einem oberen Teil (25), der mit dem oberen Teil des Mastes (7) fest verbunden ist, wobei diese Teile so zusammenarbeiten, daß jede Bewegung des einen bezüglich des anderen im Normalbetrieb der Vorrichtung gesperrt ist, wobei sich der obere Teil (25) in einer vertikalen Richtung oder in einer dieser benachbarten Richtung von dem unteren Teil (26) entfernen kann, so daß seine Neigung bezüglich des unteren Teils gestattet wird.

3. Vorrichtung zur Handhabung von Kernbrennelementbündeln (10) nach Anspruch 2, dadurch gekennzeichnet, daß die Organe (17, 19, 20, 21) zur Änderung der Standlage in der Zahl von vier vorgesehen sind, zueinander in 90° auf dem Wagen (5) um den Teleskopmast (7, 8) herum verteilt sind und einzeln oder gleichzeitig wirken können, um die Neigung des Teleskopmastes und damit des mit ihm gekoppelten Bündels in acht zueinander in 45° angeordeten Richtungen zu gewährleisten.

4. Vorrichtung zur Handhabung von Kernbrennelementbündeln nach einem der Ansprüche 2 und 3, dadurch gekennzeichnet, daß die Entfernung des oberen Teils (25) vom unteren Teil (26) des Aufbaus unter der Wirkung eines Anschlags (27) vor sich geht, der im Inneren eines mit dem unteren Teil (26) fest verbundenen Führungsgehäuses (28) eine vertikale Translationsbewegung ausführen kann, die unter der Einwirkung der Drehung eines Nockens (30) im Inneren einer in dem Anschlag (27) vorgesehenen Öffnung (29) stattfindet, wobei der Anschlag (27) über seine obere Seite mit dem oberen Teil (25) des Aufbaus zusammenwirkt.

5. Vorrichtung zur Handhabung von Kernbrennelementbündeln (10) nach Anspruch 4, dadurch gekennzeichnet, daß die Drehung des Nocken (30) im Inneren der Öffnung (29) des Anschlags (27) unter der Einwirkung einer horizontalen Achse (16) stattfindet, die ihrerseits mit Hilfe eines Hebels (31) in Drehung versetzt wird, der durch eine aus einem Elektromotor (33) und einer Winde (32) bestehende Einheit betätigt wird.

6. Vorrichtung zur Handhabung von Kernbrennelementbündeln (10) nach Anspruch 2, dadurch gekennzeichnet, daß die Entfernung des oberen Teils (25) vom unteren Teil (26) des Aufbaus unter der Einwirkung einer vertikal wirkenden Winde vor sich geht.

7. Vorrichtung zur Handhabung von Kernbrennelementbündeln (10) insbesondere im Kern eines Kernreaktors mit einem Auflager (13), das zur Aufnahme der Bündel in einer vertikalen Ausrichtung bestimmt ist, mit den Füßen der Bündel benachbarten Aufnahmebereichen oder Stellen versehen ist und ferner Öffnungen für den Umlauf eines Fluids für die Kühlung und/oder Neutronenbremsung aufweist, umfassend
- eine Handhabungsmaschine (1, 2), die sich in einer horizontalen Ebene über dem Reaktorkern bewegen kann und mit einem Antriebswagen (5) versehen ist, der sich ebenfalls in einer horizontalen Richtung bewegen kann und mit einer Vielzahl von Organen (17, 19, 20, 21) versehen ist, die auf die Standlage des Teleskopmastes einwirken können, so daß dieser gegen die Vertikale geneigt wird,
- einen Teleskopmast (7, 8), der mit seinem oberen Ende an dem Wagen (5) befestigt ist und an seinem unteren Ende mit einem Organ (11) zur Befestigung und Ankopplung an dem oberen Ende eines Brennelementbündels versehen ist,
dadurch gekennzeichnet, daß die Lagerplatte (36) des Teleskopmastes (7, 8) auf einer Vielzahl von um die Lagerplatte herum gleichmäßig verteilten und auf der Handhabungsmaschine befestigten Umfangsklötzen (37) aufliegt, die jeweils aus einem Elastomer-Stahl-Schichtkörper mit hohem Scherverformungsvermögen, aber geringem Druckverformungsvermögen bestehen, und daß die Lagerplatte (36) durch Stellglieder (41) bewegt wird, die auf Höhe des Umfangs der Lagerplatte einwirken.

8. Vorrichtung zur Handhabung von Kernbrennelementbündeln (10) nach Anspruch 7, dadurch gekennzeichnet, daß die Stellglieder (41) mindestens in der Zahl von zwei vorgesehen und zueinander in einem Winkel von 90° gerichtet sind und aus elektrischen Winden mit kleinem Hub bestehen.

9. Vorrichtung zur Handhabung von Kernbrennelementbündeln (10) nach Anspruch 7, dadurch gekennzeichnet, daß die die Stellglieder (41) bildenden Winden auf einem Elastomerkugelgelenk (43) montiert sind, so daß ihre Ausrichtung in Abhängigkeit von der Ausrichtung der Lagerplatte angepaßt werden, deren Ursache sie sind.

## Claims

1. Process for handling nuclear fuel assemblies (10) inside the core of a nuclear reactor using a charging machine (1) which can move in a horizontal plane overhanging said reactor, and provided with a mast (7) and co-axial telescopic tube (8) destined to grip these assemblies (10) by their top end, said mast (7) and accordingly the assembly to which it is connected being titled in such a way that first of all the base (15) of this assembly is moved to the desired emplacement of the bearer-plate (13) of these assemblies inside the core of the reactor, characterized in that it consists in moving said charging machine (1) in synchronism with the restoring of the verticality of said assembly until reaching a vertical position of said assembly.

2. Device for handling nuclear fuel assemblies (10) in particular in the core of a nuclear reactor comprising a bearer-plate (13) destined to receive these assemblies in a vertical orientation, this bearer-plate being provided with adjoining receiving zones or emplacements for the bases of these assemblies and also comprising openings to permit the circulation of a cooling and/or neutron moderator liquid, comprising :
. a handling machine (1,2) which can be moved in a horizontal plane above the core of the reactor and is provided with an operating trolley (5) which can also move in a horizontal direction, and provided with a plurality of elements (17, 19, 20, 21) that can act on the position of the telescopic mast so as to tilt same in relation to the vertical;
. a telescopic mast (7,8) the top end of which is fixed to said trolley (5), and the bottom end of which is provided with an element (11) for fixing and connecting it to the top end of a fuel assembly,
characterised in that the joining of the telescopic mast (7,8) to the operating trolley (5) takes place by means of a raising block consisting of two parts, a bottom part (26) solid with the trolley (5) and a top part (25) solid with the top part of the mast (7), which two parts co-operate with one another in such a way that during the normal functioning of the machine any movement of the one in relation to the other is prevented, the top part (25) being capable of being moved away from the bottom part (26) in a vertical direction or a direction close to this, in such a way to permit its tilting relative to the bottom part.

3. Device for handling nuclear fuel assemblies (10) according to claim 2, characterised in that the tilt changing elements (17, 19, 20, 21) number four arranged at 90° in relation to one another on the trolley (5) and around the telescopic mast (7, 8) and can operate either individually or simultaneously to ensure the tilting of the telescopic mast and accordingly of the assembly to which it is connected, in eight directions positioned at 45° in relation to one another.

4. Device for handling nuclear fuel assemblies (10) according to any one of the claims 2 and 3, characterised in that the moving away of the top part (25) from the bottom part (26) of the raising block takes place under the action of a stop (27), which can move vertically inside a guide box (28) solid with said bottom part (26), the moving of this stop (27) taking place under the action of the rotating of a cam (30) inside an opening (29) provided in this stop (27), the stop (27) co-operating with the top part (25) of the raising block with its upper face.

5. Device for handling nuclear fuel assemblies (10) according to claim 4, characterised in that the rotating of the cam (30) inside the opening (29) of the stop (27) takes place under the action of a horizontal axle (16), which in turn is made to rotate by means of a lever (31), the actuating of which is ensured by an electric motor (33) - jack assembly (32).

6. Device for handling nuclear fuel assemblies (10) according to claim 2, characterised in that the moving away of the top part (25) from the bottom part (26) of the raising block takes place under the action of a jack with vertical actuation.

7. Device for handling nuclear fuel assemblies (10), in particular in the core of a nuclear reactor comprising a bearer-plate (13) destined to receive these assemblies in a vertical orientation, this bearer-plate being provided with adjoining receiving zones or emplacements for the bases of these assemblies and also comprising openings to permit the circulation of a cooling and/or neutron moderator liquid, comprising :
. a handling machine (1,2) , which can be moved in a horizontal plane above the core of the reactor and is provided with an operating trolley (5) which can also move in a horizontal direction, and provided with a plurality of elements (17, 19, 20, 21) that can act on the position of telescopic mast so as to tilt same in relation to the vertical ;
. a telescopic mast (7, 8), the top end of which is fixed to said trolley (5), and the bottom end of which is provided with an element (11) for fixing and connecting it to the top end of a fuel assembly,
characterised in that the base (36) of the telescopic mast (7,8) rests on a plurality of peripheral studs (37) regularly distributed around the base and fixed to the handling machine, these studs (37) each consisting of an elastomer - steel laminate with a high shear deformation capacity but a low compression deformation capacity, and in that the base (36) is moved by means of actuator (41) acting at the level of the periphery of the base.

8. Device for handling nuclear fuel assemblies (10) according to claim 7, characterised in that the actuators (41) number at least two, arranged at 90 degrees in relation to one another, and are formed by electric jacks with a small path.

9. Device for handling nuclear fuel assemblies (10) according to claim 7, characterised in that the jacks which form the actuators (41) are mounted on an elastomer swivel joint (43), so that their orientation can adapt in accordance with the orientation of the base to which they belong.
